# EUROPEAN PATENT APPLICATION

(11) **EP 4 760 674 A1**
(43) Date of publication of application: **17.06.2026**
(21) Application number: 25159451.1
(22) Date of filing: 21.02.2025
(51) Int. Cl.: G08G 1/16, G06V 20/58

(54) **VEHICLE DATA PROCESSING DEVICE AND VEHICLE DATA PROVISION METHOD**

(30) Priority: 10.12.2024 TW 113147944
(71) Applicant: Industrial Technology Research Institute, 31040 Hsinchu (TW)
(72) Inventor: LIN, Kang-Chiao, Zhudong Township (TW)
(74) Representative: Ström & Gulliksson AB

(57) **Abstract**

A vehicle data processing device and vehicle data provision method, the device includes a communication unit, a sensing unit, a processing unit and a display unit. The communication unit receives first sensed object data. The sensing unit generates vehicle sensed data. The processing unit generates external object data based on the first sensed object data and the vehicle sensed data, generates a comparison result based on the position data in the external object data and the position data in the vehicle sensed data, and generates a trigger signal to the communication unit to request and receive vehicle see-through data if the comparison result includes at least one mismatched objects. The display unit provides display images based on the vehicle see-through data.

## Description

### BACKGROUND

### TECHNICAL FIELD

The technical field relates to vehicle data processing device with a conditional see-through image provision.

### Description of Related Art

Currently, over 55% of traffic accidents are caused by obstructed vision, such as collisions between preceding and following cars following behind. Existing advanced driver assistance systems (ADAS) products can detect events within visual range, while vehicle-to-everything (V2X) communication technology provides safety warning messages. See-through systems utilize V2X low-latency technology to provide image streaming between preceding and following vehicles, and combine image stitching technology to enhance the driver's visual perception of obstructed vision.

How to efficiently activate the see-through system and avoid unnecessary image transmission is one of the current topics of discussion.

### SUMMARY

According to one embodiment of the present application, a vehicle data processing device includes a communication unit, a sensing unit, a processing unit, and a display device. The communication unit receives first sensed object data transmitted from a first external vehicle. The sensing unit generates subject vehicle sensed data. The processing unit is electrically or communicatively connected to the communication unit and the sensing unit and generates, according to the first sensed object data and the subject vehicle sensed data, external object data, generate a comparison result based on position data in the external object data and position data in the subject vehicle sensed data, if the comparison result includes at least one unmatched object, and generate a trigger signal to the communication unit for requesting and receiving vehicle see-through data transmitted from the first external vehicle. The display device provides, according to the vehicle see-through data, a display screen including the at least one unmatched object.

According to one embodiment of the present application, a vehicle data provision method for a vehicle data processing device, including: receiving first sensed object data transmitted from first external vehicle; generating a subject vehicle sensed data; generating external object data according to the first sensed object data and the subject vehicle sensed data; generating a comparison result based on the external object data and the subject vehicle sensed data; if the comparison result includes at least one unmatched object, generating a trigger signal for requesting and receiving a first vehicle see-through data transmitted from the first external vehicle; and providing, according to the first vehicle see-through data, a display screen including the at least one unmatched object.

### BRIEF DESCRIPTION OF THE DRAWINGS

The application can be more fully understood by reading the following detailed description of the embodiment, with reference made to the accompanying drawings as follows:
Figure 1A is a schematic block diagram of mobile carriers having vehicle data processing devices illustrated according to the embodiment of the present application.
Figure 1B is a schematic block diagram of vehicle data processing devices illustrated according to the embodiment of the present application.
Figure 2 is a flow chart of a vehicle data provision method according to the embodiment of the present application.
Figure 3 is a flow chart of detailed steps in part of a vehicle data provision method according to the embodiment of the present application.
Figure 4 is a schematic block diagram of mobile carriers having vehicle data processing devices illustrated according to the embodiment of the present application.
Figure 5A is a schematic diagram of the coordinates corresponding to the sensed object data sensed by the external vehicle according to the embodiments in Figure 4 of the present application.
Figure 5B is a schematic diagram of the coordinates corresponding to the subject vehicle sensed data sensed by the subject vehicle according to the embodiments in Figure 4 of the present application.
Figure 5C is a schematic diagram of the coordinates corresponding to the external object data according to the embodiments in Figure 4 of the present application.
Figure 5D is a schematic diagram of the coordinates corresponding to the external object data after removal the object according to the embodiments in Figure 4 of the present application.
Figure 6 is a schematic block diagram of mobile carriers having vehicle data processing devices illustrated according to the embodiment of the present application.
Figure 7A is a schematic diagram of the coordinates corresponding to the sensed object data sensed by the external vehicle according to the embodiments in Figure 6 of the present application.
Figure 7B is a schematic diagram of the coordinates corresponding to the subject vehicle sensed data sensed by the subject vehicle according to the embodiments in Figure 6 of the present application.
Figure 7C is a schematic diagram of the coordinates corresponding to the external object data according to the embodiments in Figure 6 of the present application.
Figure 7D is a schematic diagram of the coordinates corresponding to the external object data after removal the object according to the embodiments in Figure 6 of the present application.
Figure 8 is a schematic block diagram of mobile carriers having vehicle data processing devices illustrated according to the embodiment of the present application.
Figure 9A is a schematic diagram of the coordinates corresponding to the sensed object data sensed by the external vehicle according to the embodiments in Figure 8 of the present application.
Figure 9B is a schematic diagram of the coordinates corresponding to the sensed object data sensed by the external vehicle according to the embodiments in Figure 8 of the present application.
Figure 9C is a schematic diagram of the coordinates corresponding to the subject vehicle sensed data sensed by the subject vehicle according to the embodiments in Figure 8 of the present application.
Figure 9D is a schematic diagram of the coordinates corresponding to the external object data according to the embodiments in Figure 8 of the present application.
Figure 9E is a schematic diagram of the coordinates corresponding to the external object data after removal the object according to the embodiments in Figure 8 of the present application.
Figure 10 is a schematic block diagram of mobile carriers having vehicle data processing devices illustrated according to the embodiment of the present application.

### DETAILED DESCRIPTION

Some of the example embodiments will be described in detail in the accompanying drawings. The following descriptions refer to component symbols, and when the same component symbols appear in different drawings, they will be regarded as the same or similar components. These example embodiments are only a portion of the present application and do not reveal all of the ways in which the present application may be implemented. More specifically, these example embodiments are only examples of methods, devices, and systems within the scope of this patent application.

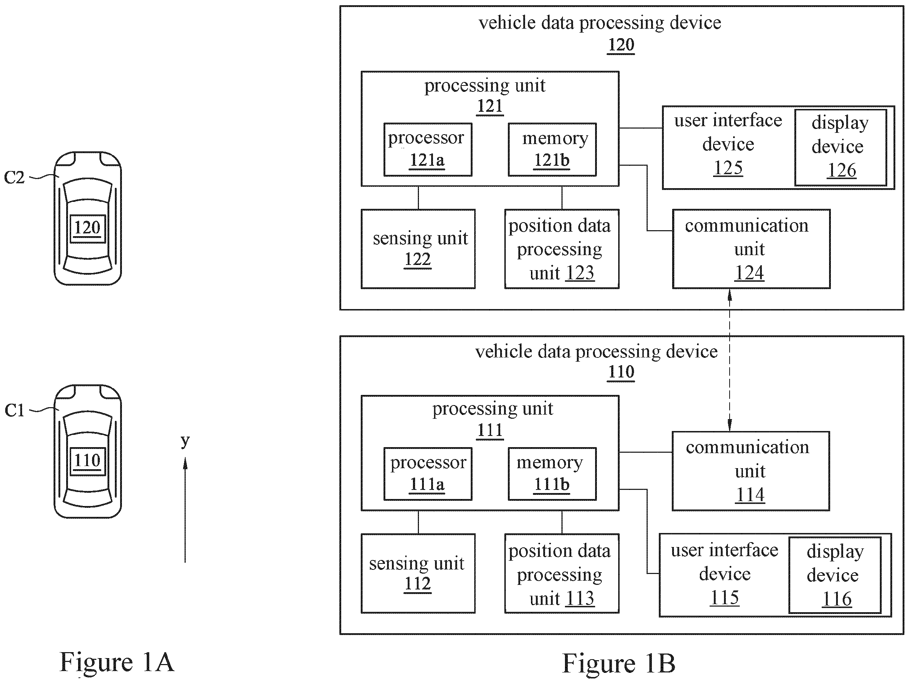

Figure 1A is a schematic block diagram of mobile carriers C1 and C2 having vehicle data processing devices 110 and 120 illustrated according to the embodiment of the present application. In some embodiments, the mobile carrier C1, C2 can be small cars, mid-size cars, or any other manned or unmanned vehicles. As shown in Figure 1A, the mobile carrier C2 is in front of the mobile carrier C1, and the mobile carriers C1 and C2 propagate along the same y direction. In the following embodiments, for the sake of interpretation, the mobile carrier C1 is referred to as the subject car, and the mobile carrier C2 is referred to as an external vehicle.

In some embodiments, the subject vehicle C1 and the external vehicle C2 have the vehicle data processing devices 110 and 120 respectively to perform data exchange. For example, the subject vehicle C1 and the external vehicle C2 or other vehicles infrastructure can communicate or exchange basic safety information and imaging information based on Vehicle-to-Vehicle (V2V) or Vehicle to Vehicle (V2X) technology.

Figure 1B is a schematic block diagram of vehicle data processing devices 110 and 120 illustrated according to the embodiment of the present application. In some embodiments, the vehicle data processing device 110 and 120 have similar configurations. And the configurations of the vehicle data processing device 110 will be discussed in detail.

The vehicle data processing device 110 can include a processing unit 111, a sensing unit 112, a position data processing unit 113, a communication unit 114 and a user interface device 115. The processing unit 111 can be wirelessly, wired or electrically connected to the sensing unit 112, the position data processing unit 113 and /or the communication unit 114. In some embodiments, the user interface device 115 can include the display device 116.

The processing unit 111 can be configured to control operations of the vehicle data processing device 110, and can include a processor 111a and a memory 111b. In some embodiments, the processor 111a can be, for example, a central processing unit (CPU), an application processor (AP), or other programmable general-purpose or special-purpose microprocessor, digital signal processor (DSP), image signal processor (ISP), graphics processing unit (GPU), or other similar devices, integrated circuits, and/or combinations thereof.

The memory 111b may be, for example, any type of fixed or removable random access memory (RAM), read-only memory (ROM), flash memory, hard disc or other similar device, integrated circuit, and/or combination thereof.

The sensing unit 112 may be configured to generate subject vehicle sensed data. In some embodiments, the sensing unit 112 may be configured to capture an image/video of an object located outside the subject vehicle C1. For example, the sensing unit 112 may photograph/video an object in a physical scene outside the subject vehicle C1 to obtain an object image/video. The sensing unit 112 can be, for example, at least one image sensor, or can be at least one image sensor coupled with at least one depth sensor for image recognition and localisation of the object, in which the image sensor may include a visible light sensor or a non-visible light sensor (e.g., an infrared sensor). In some embodiments, the sensing unit 112 can be, for example, an optical positioner for optical spatial localisation or a device that can be used to locate the position data of the user.

In some embodiments, an image sensor may be configured to capture an image/video, the image sensor may include a camera lens with a lens and a photographic element. Depth sensors may be configured to detect depth data, which can be implemented using active depth sensing technology and/or passive depth sensing technology. Active depth sensing technology can be used to calculate depth data by actively emitting light, infrared, ultrasound, laser, etc. as signals with time-difference ranging technology. Passive depth sensing technology can be used to capture two images in front of the camera by two image sensors to different viewing angles, and use the visual difference between the two images to calculate depth data.

The position data processing unit 113 is configured to generate position data of the subject vehicle C1. For example, the position data processing For example, the position data processing unit 113 can be a system that supports Global Positioning System (GPS), Assisted Global Positioning System (AGPS), Galileo Positioning System or Global Navigation Satellite System (GLObal NAvigation System). System (AGPS), Galileo Positioning System (GPS) or GLObal NAvigation Satellite System (GLONASS). In some embodiments, the position data processing unit 113 can be configured to provide GPS data and /or position data, and etc., of the subject vehicle C1 to the processing unit 111.

The communication unit 114 receives and /or transmits data processed by processing unit 111 and/or sensing data sensed by the sensing unit 112, transmits, broadcasts and/or receives V2V, V2X and /or any other communication information. In some embodiments, the communication unit 114 may, for example, support Global System for Mobile Communication (GSM) systems, Personal Handy-phone Systems (PHS), Code Division Multiple Access (CDMA) systems, Wireless LAN (WLAN) systems, Worldwide Interoperability for Microwave Access (WiMAX) system, Evolutionary Data Optimization (EV-DO), 1xEV-DO, EV-DO Rev A, EV-DO Rev B, High-Rate Packet Data (HRPD), High-Speed Packet Access (HSPA), High-Speed Downlink Packet Access (HSDPA), High-Speed Uplink Packet Access (HSUPA), High-Speed Packet Access Plus (HSPA+), Advanced Mobility System (AMPS), Radio Access Technology (RAT), such as Third Generation (3G), Long Term Evolution (LTE), Fourth Generation (4G), Fifth Generation (5G) and/or later RATs (e.g., Sixth Generation (6G)), satellite communications such as (Low-Earth Orbit (LEO) satellite communications, Medium-Earth Orbit (MEO) satellite communications, etc.), Wireless Access in Vehicular Environments (WAVE), Dedicated Short Range Communication (DSRC), etc., or communication circuits, chips and/or software for other suitable communication technologies.

The user interface device 115 can be for an on-vehicle device, a vehicle computer, a cell phone, a mobile device, or any other device that has the ability to input and output and process information. In some embodiments, the display device 116 in the user interface device 115 can be configured to display data. The display device 116 may be a display, and in one embodiment, the display device 116 is, for example, a liquid crystal display (LCD), a field sequential color LCD, a light emitting diode (LED) display, an electrically moisturized translucent display, an augmented reality head up display (ARHUD), or a projection translucent display. The display device 116 can be used as the window screen of the C1 of this vehicle. The user in the subject vehicle C1 may view the external scene or a specific image of the subject vehicle C1 via the display device 116. The content displayed by the display device 116 can be an external scene that includes superimposed other data (e.g. virtual data, virtual images, external vehicle C2transmitted from images or warnings, etc.). In some embodiments, the content displayed by the display device 116 can also be only other information (e.g. virtual information, virtual images, images or warnings transmitted from an external vehicle C2, etc.).

In some embodiments, as shown in Figure 1B, the vehicle data processing device 120 can have components that are configured to perform the same functions as the vehicle data processing device 110. In some embodiments, the vehicle data processing devices 110 and 120 transmit, through the communication unit 114 and the communication unit 124 respectively, broadcast and /or receive V2V, V2X and /or other communication information. For the description of the vehicle data processing device 120, please refer to the description of the vehicle data processing device 110 and will not be repeated herein.

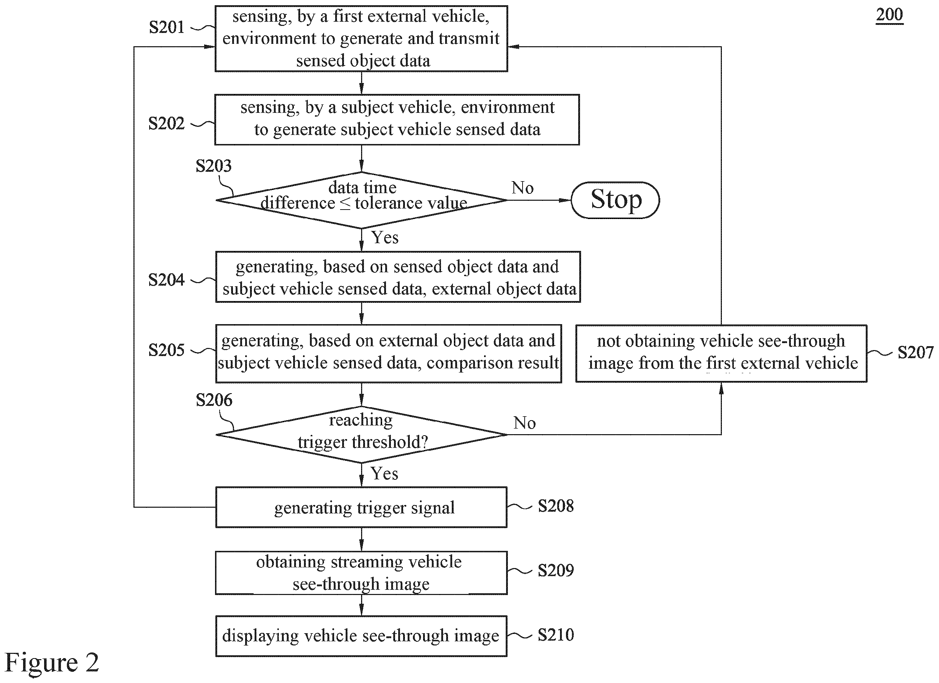

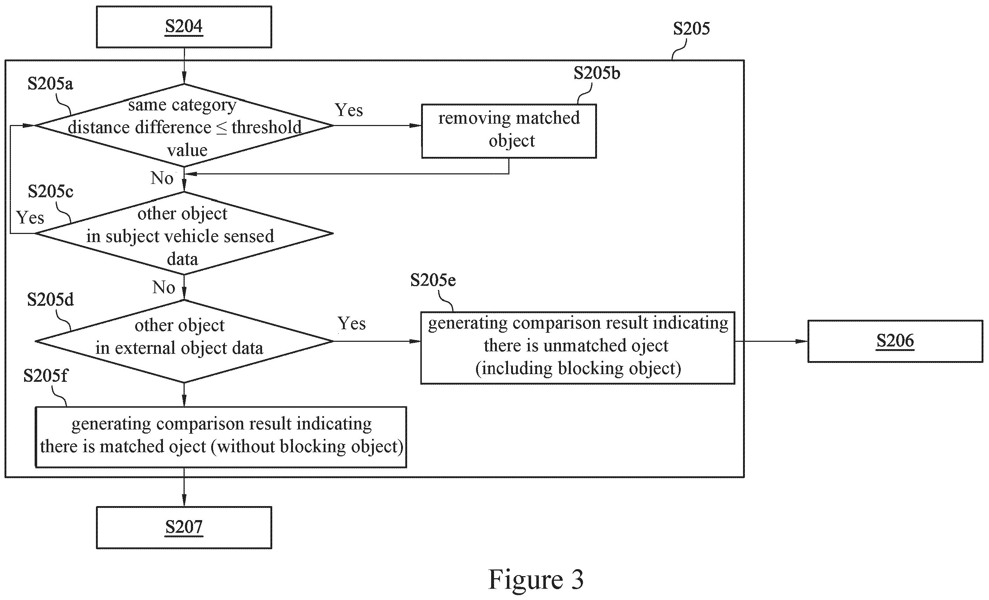

Figure 2 is a flow chart of a vehicle data provision method 200 according to the embodiment of the present application, and Figure 3 is a flow chart of detailed steps in part of a vehicle data provision method 200 according to the embodiment of the present application. It is understood that additional operations can be provided before, during, and after the processes shown by Figure 2 and Figure 3, and some of the operations described below can be replaced or eliminated, for additional embodiments of the vehicle data provision method 200. The vehicle data provision method 200 includes operations S201-S210 and steps S205a-S205f that are described below with reference to the Figure 1A, Figure 1B, Figure 4 and Figure 10.

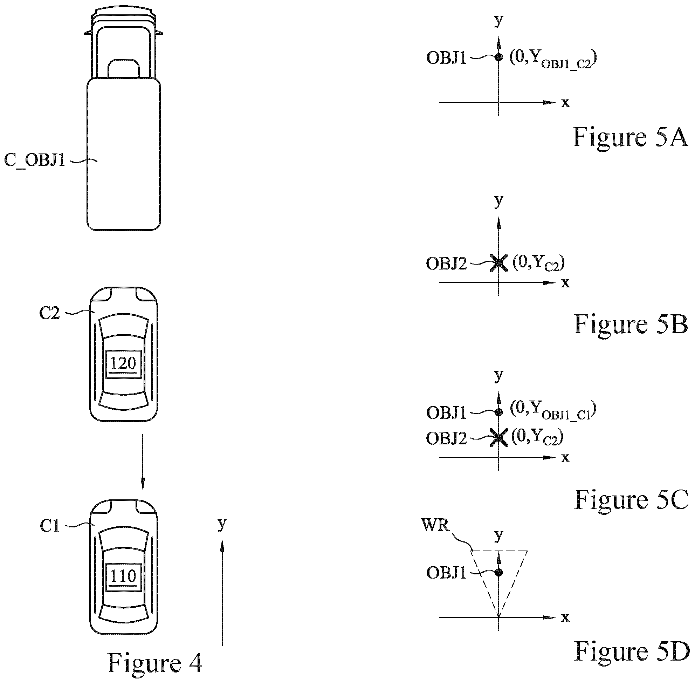

Taking the embodiments of Figure 4 as an example, the subject vehicle C1 and the external vehicle C2 are propagating in the same y direction, and there is an object C_OBJ1 (e.g., a truck) further in front of the external vehicle C2. When the subject vehicle C1 intends to overtake the external vehicle C2, due to the blocking of sight by external vehicle C2, the driver of the subject vehicle C1 cannot directly see object C_OBJ1. In some embodiments, by the vehicle data processing devices 110, 120 and vehicle data provision method 200 presented in this application, the subject vehicle C1 may determine whether or not it is necessary to send requests to the external vehicle C2 through V2Vor V2X mode to obtain the vehicle see-through data that includes the object C_OBJ1. Then, By displaying the vehicle see-through data in the display device 116 of the subject vehicle C1, the driver of the subject vehicle C1 can see object C_OBJ1 and make an overtaking action.

Reference is now made to Figure 1B, Figure 2 and Figure 5A to Figure 5D to describe the embodiments of the subject vehicle C1 and the external vehicle C2 of Figure 4 that utilize the vehicle data provision method 200.

In step S201, the external vehicle C2 senses environment to generate and transmit sensed object data, as shown in Figure 5A. The sensed object data can include category data of object(s) sensed by the external vehicle C2 and position data of the external vehicle C2 and the object(s). In some embodiments, the position data can include an absolute coordinates (for example, GPS coordinate) of the external vehicle C2 and relative coordinates of the object outside of the external vehicle C2 relative to the external vehicle C2. Specifically, it is described below.

The sensing unit 122 in the external vehicle C2 obtains the object image/video, and the processing unit 121 performs image recognition to the object image to determine the category data of the object C_OBJ1, for example, determining the category of the object C_OBJ1 as vehicle.

In some embodiments, the sensing unit 122 and the position data processing unit 123 obtain the position data. For example, the sensing unit 122 further performs image recognition and localization of object C_OBJ1 to obtain the relative coordinates of object C_OBJ1 with respect to external vehicle C2. For example, as shown in Figure 4 and Figure 5A, when the object C_OBJ11 is in front of the external vehicle C2 by a distance Y_{OBJ1_C2}, with the position of the external vehicle C2 as the origin. The relative coordinates of the object C_OBJ11 relative to the external vehicle C2 is (0,Y_{OBJ1_C2}), and the object C_OBJ11 is denoted as "OBJ1" on the coordinate diagram. In another embodiment, the position data processing unit 123 provides the absolute coordinates (e.g., GPS coordinates) of the external vehicle C2.

In some embodiments, the sensed object data can further include the data, such like the moving direction/velocity of the object C_OBJ11. For example, the processing unit 121 calculates the moving direction/velocity of the object C_OBJ11 according to variations in relative coordinates of the object C_OBJ11 with respect to time obtained from the sensing unit 122.

Then, the external vehicle C2 provides, through the communication unit 124 (for example, through the mode of V2X), the sensed object data to a neighboring the mobile carrier (for example, the subject vehicle C1) once or continuously. For example, the communication unit 124 can broadcast the sensed object data at a frequency f1. In some embodiments, the frequency f1 can be referred to as the frequency at which other mobile carriers receive the sensed object data. The frequency f1 can be 10 Hz, but the present application is not limited thereto. In some embodiments, not necessarily requiring the use of broadcasting, the external vehicle C2 can also transmit the sensed object data to specific mobile carrier.

Continuing with step S201, in step S202, the subject vehicle C1 senses the environment through the sensing unit 112 to generate the subject vehicle sensed data as shown in Figure 2.

Reference is made to Figure 5B. Figure 5B is a schematic of the coordinates corresponding to the subject vehicle sensed data sensed by the subject vehicle according to the embodiments in Figure 4 of the present application, with the position of the subject vehicle C1 as the origin.

As shown in the embodiments of Figure 4, since the subject vehicle C1 is blocked by the external vehicle C2 and cannot sense the object C_OBJ11 in front of the external vehicle C2, the sensing unit 112 of the subject vehicle C1 can only sense the external vehicle C2 and obtain the relative coordinates (0,Y_{C2}) of the external vehicle C2 relative to the subject vehicle C1. The external vehicle C2 is denoted as OBJ1 in the schematic diagram of the coordinates. In some embodiments, the processing unit 111 of the subject vehicle C1 generates continuously the subject vehicle sensed data at the frequency f2. The frequency f2 can be 10 Hz, but the present application is not limited thereto.

In addition to sensing positions of the objects around, in some embodiments, the subject vehicle sensed data generated by the subject vehicle C1 further includes category data of the sensed object. For example, the processing unit 111 may determine the object category of external vehicle C2 to be a vehicle by performing image recognition. In some embodiments, the subject vehicle sensed data can further include data of the sensed object, such like moving direction and /or velocity, etc. The associated operations of determining moving direction and/or velocity of the processing unit 111 are similar to that of the processing unit 121, and are omitted here.

In step S203, the processing unit 111 then determines a data time difference between the sensed object data and the subject vehicle sensed data is smaller than or equal to a tolerance value. In some embodiments, the tolerance value is around 0.1 seconds.

For example, in some embodiments, the frequency f1 (also the frequency at which the communication unit of the subject vehicle C1 receives the sensed object data) at which the communication unit 124 of the external vehicle C2 broadcasts the sensed object data is significantly different from the frequency f2 at which the processing unit 111 of the subject vehicle C1 generates the subject vehicle sensed data. For example, the frequency f1 is around 1 Hz (that is the time interval between the first and last data is 1 second); whereas the frequency f2 is around 10 Hz (that is the time interval between the first and last data is 100 ms). In such arrangement, the data time difference the sensed object data and the subject vehicle sensed data can be 900 ms, exceeding the tolerance value equal to 100ms. The situation mentioned above indicates the sensed object data and the subject vehicle sensed data are obtained with time variations, and the two data should not be compared with each other. Accordingly, the vehicle data provision method 200 stops to continue operation. In some embodiments, the frequency f1 needs to be greater than or equal to the frequency f2.

On contrary, in other embodiments, when the frequency f1 and the frequency f2 are close or equal to each other (e.g., both being 10 Hz), the data time difference between the sensed object data and the subject vehicle sensed data can be 100 ms or smaller than 100 ms. This indicates the sensed object data and the subject vehicle sensed data are obtained in close times, and accordingly, step S204 is performed.

In step S204, the processing unit 111 generates, according to the sensed object data and the subject vehicle sensed data received by the communication unit 114, the external object data.

Reference is now made to both Figure 4 and Figure 5C. Figure 5C is a schematic diagram of the coordinates corresponding to the external object data according to the embodiments in Figure 4 of the present application, in which the position of the subject vehicle C1 is referred to as the origin.

Specifically, the subject vehicle C1 can obtain, through the position data processing unit 113 thereof, the absolute coordinates (for example, GPS coordinates) of the subject vehicle C1. Then, as the relative coordinates of the external vehicle C2 relative to the subject vehicle C1 are known, the processing unit 111 can further calculate, according to the relative coordinates of the object C_OBJ11 relative to the external vehicle C2, the relative coordinates (0,Y_{OBJ1_C1}) of the object C_OBJ11 relative to the subject vehicle C1.

After step S204, step S205 is performed. Reference is now made to Figure 3. In some embodiments, step S205 includes step S205a to S205f.

Reference is now made to Figure 3, Figure 5C corresponding to the external object data, and Figure 5B corresponding to the subject vehicle sensed data.

In step S205a, the processing unit 111 compares object(s) in the external object data with object(s) in the subject vehicle sensed data one by one. For example, the processing unit 111 firstly determines whether a category of an object (as shown in Figure 5C) in the external object data and a category of an object (as shown in Figure 5B) in the subject vehicle sensed data are the same or have certain similarity and whether the distance difference therebetween is smaller than or equal to a threshold value.

As shown in Figure 5B and Figure 5C, the processing unit 111 obtains the external object data corresponding to Figure 5C (indicating the category data of the external vehicle C2 being "vehicle" and the coordinates of OBJ2 denoted, according to the position data of the external vehicle C2, as (0,_{YC2})) and compares the external object data with the subject vehicle sensed data corresponding to Figure 5B (indicating the category data of the external vehicle C2 being "vehicle" and the coordinates of OBJ2 denoted, according to the position data of the external vehicle C2, as (0,_{YC2})). Based on the data mentioned above, the processing unit 111 determines that the category data of the external vehicle C2 in the external object data and in the subject vehicle object data are "vehicle," which are the same category. Then, the processing unit 111 determines that the distance difference between the coordinates of OBJ (both being (0,YC2)) in Figure 5B and Figure 5C corresponding to the external vehicle C2 is smaller than or equal to threshold value (e.g., around 0.5 meters), which indicates that positions of the external vehicle C2 in the external object data and in the subject vehicle sensed data are close.

Based on the determination result above, as the category are the same and the positions are close, the processing unit 111 determines that the external vehicle C2 denoted as OBJ2 in the external object data and in the subject vehicle sensed data are the same object, and accordingly, step S205b is performed.

Reference is now made to both Figure 5C and Figure 5D, in which Figure 5D is a schematic diagram of the coordinates corresponding to the external object data after removal the object according to the embodiments in Figure 4 of the present application. In step S205b, the processing unit 111 refers the external vehicle C2, to which the subject vehicle sensed data corresponds, as matched object, and removes it from the external object data in Figure 5C, so that the updated external object data is generated as shown in Figure 5D.

Then, in step S205c, the processing unit 111 determines whether there is any other corresponding object in the subject vehicle sensed data. If there are other objects, step S205a is performed. If there is no object, step S205d is performed. For example, after comparing the denotation OBJ2 corresponding to the external vehicle C2, as shown in Figure 5B, there is no object other than the denotation OBJ2 in the subject vehicle sensed data.

In step S205d, the processing unit 111 determines whether there is any other object in the external object data. In some embodiments of including other object, the processing unit 111 determines that there is object(s) in the external object data not matching objects in the subject vehicle sensed data. Reference is made to the corresponding updated external object data as shown in Figure 5D, Figure 5D includes denotation OBJ1, indicating that there is the object C_OBJ11 in front of the external vehicle C2 and not sensed or fully sensed by the subject vehicle C1. In some embodiments, for the subject vehicle C1, the object C_OBJ11 is probably an object being fully or partially blocked by the external vehicle C2.

Then, step S205e is performed to generate a comparison result indicating there is an unmatched object. For example, as shown in Figure 5D, the object C_OBJ11 is an object in the external object data unmatched with the subject vehicle object data. After step S205e, step S206 in Figure 2 is performed.

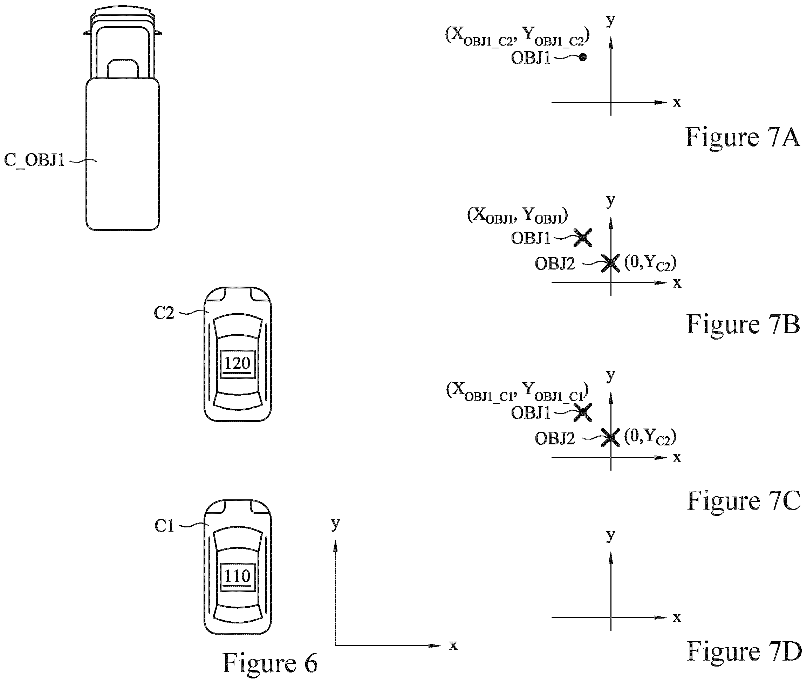

On contrary, when step S205d determines that there is no other object, step S205f is performed. For example, reference is made to Figure 6 and Figure 7A to Figure 7D. In the embodiments of FIG. 6, the object C_OBJ1, the subject vehicle C1, and the external vehicle C2 stagger along x direction.

Reference is made to Figure 6 and Figure 7A. Figure 7A is a schematic diagram of the coordinates corresponding to the sensed object data sensed by the external vehicle C2 according to the embodiments in Figure 6 of the present application, with the position of the external vehicle C2 being as the origin. The object C_OBJ11 is in front of the external vehicle C2 by a distance Y_{OBJ1_C2} and staggered by a distance X_{OBJ1_C2} along x direction. The object C_OBJ11 is denoted as OBJ1 in the coordinate diagram and relative coordinates are (X_{OBJ1_C2},Y_{OBJ1_C2}) relative to the external vehicle C2.

Reference is now made to Figure 7B and Figure 7C. Figure 7B corresponds to the subject vehicle sensed data generated by the subject vehicle C1 and Figure 7C corresponds to the subject vehicle sensed data generated by the subject vehicle C1. In some embodiments, the processing unit 111 determines by step S205a that the denotations OBJ1, OBJ2 (corresponding the object C_OBJ1 and the external vehicle C2 respectively) in the external object data (as shown in Figure 7C ) match denotations OBJ1, OBJ2 in the subject vehicle sensed data (as shown in Figure 7B). Further by step S205b and S205c, in step S205d, the processing unit 111 determines that the external object data does not include other object, as shown in Figure 7D. Accordingly, step S205f is performed to generate the comparison result indicating that there is matched object (e.g., no blocked object), which shows that he subject vehicle C1 sense all object(s) in front of the external vehicle C2. No object is blocked in sight of the subject vehicle C1. After step S205f, step S207 of Figure 2 is performed. In some embodiments, according to step S207, the subject vehicle C1 does not transmit requests for vehicle see-through image to the communication unit 114; that is, the vehicle see-through image is not received from the external vehicle C2.

With reference back to Figure 4 and Figure 5A to Figure 5D to to continue the discussion on the embodiments of determining that object C_OBJ1 is a blocked object that cannot be sensed by the subject vehicle C1.

After step S205e, step S206 is performed, the processing unit 111 determines whether data of denotation OBJ1, corresponding to the object C_OBJ11, in the external object data reaches a trigger threshold.

In some embodiments, the trigger threshold can be that the denotation OBJ1 corresponding the object C_OBJ11 falls in the warning region WR. For example, as shown in Figure 5D, the denotation OBJ1 is within the warning region WR. Accordingly, step S208 is performed.

On contrary, if the denotation OBJ1 corresponding to the object C_OBJ11 is not within the warning region WR, step S207 is performed.

In some other embodiments, the trigger threshold can be that the distance between the object C_OBJ11 and the subject vehicle C1 is smaller than or equal to a threshold value. For example, the threshold value can be 10 meters. When the distance between the object C_OBJ11 and the subject vehicle C1 is smaller than or equal to 10 meters, the processing unit 11 1determines that data of the denotation OBJ1 corresponding to the object C_OBJ11 in the external object data reaches the trigger threshold and step S208 is performed. Configurations of trigger thresholds may be set according to the needs of applying the embodiments of this application, and this application is not limited by such embodiments.

In step S208, the processing unit 111 generates the trigger signal to the communication unit 114 for requesting and receiving image including the object C_OBJ11 provided by the external vehicle C2.

Then, in step S209, the subject vehicle C1 receives continuously, through the communication unit 114, vehicle see-through image corresponds to the trigger signal and includes the object C_OBJ11. In some embodiments, vehicle see-through image may be in the form of a stream of sequences.

The display device 116 then provides, according to step S210, the display screen including the object C_OBJ11 based on the vehicle see-through data.

In some embodiments, the display device 116 can superimpose the received image of the object C_OBJ11 and the image of the external vehicle C2 taken by the subject vehicle C1, to provide the driver of the subject vehicle C1 with a further intuitive external object image. For example, even if the object C_OBJ11 is blocked by the external vehicle C2, through the configuration of this application, the driver of the subject vehicle C1 can "see" the external vehicle C2 and the object C_OBJ11 at the same time, thus determining whether to overtake or other operations. Therefore, through this application of technical content, user experience will be enhanced to further improve driving safety.

According to some embodiments, the vehicle data provision method 200 continues operations from step S201 to S206, S208 to S210, until the comparison result generated in step S205 indicates that there is no object that is in front of the external vehicle C2 and not sensed by the subject vehicle C1. The processing unit 111 generates requests to the communication unit 114 to stop receiving the vehicle see-through image.

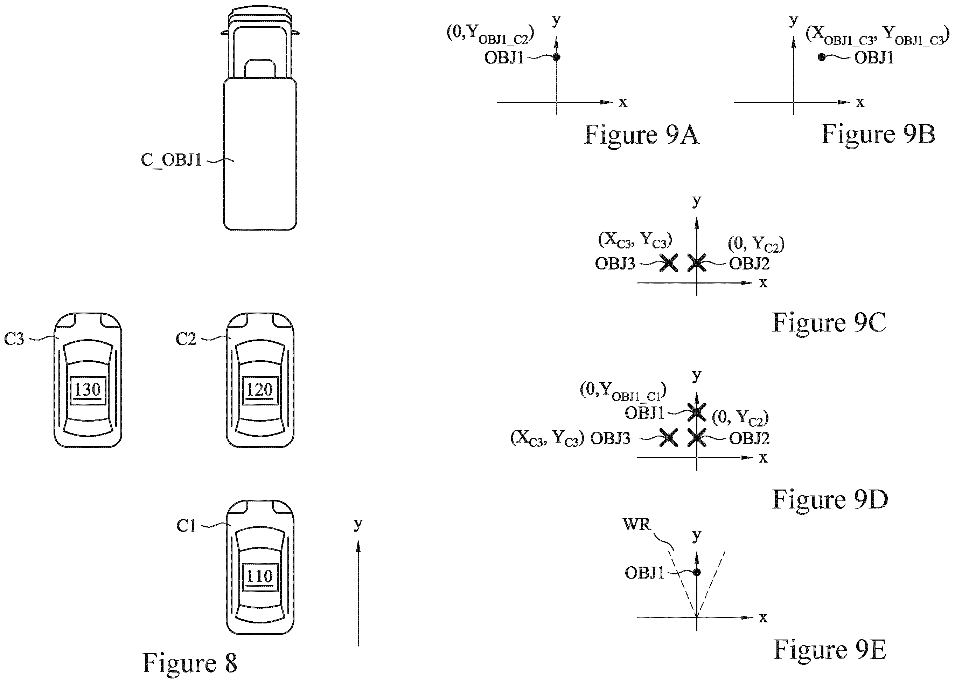

In some embodiments, the vehicle data provision method 200 can be applied to condition where there are multiple mobile carriers. As shown in Figure 8 and Figure 9A to Figure 9E, except the external vehicle C2 situated directly in front of the subject vehicle C1, there is an external vehicle C3 located at diagonal front and the object C_OBJ11 located directly in front of the external vehicle C2. The external vehicle C3 includes a vehicle data processing device 130 similar to or functioning similarly to the vehicle data processing device 110.

Figure 9A and Figure 9B are schematic diagrams of the coordinates corresponding to the sensed object data sensed by the external vehicle C2 and the external vehicle C3 according to the embodiments in Figure 8 of the present application. Figure 9C is a schematic diagram of the coordinates corresponding to the subject vehicle sensed data sensed by the subject vehicle C1 according to the embodiments in Figure 8 of the present application. Figure 9D is a schematic diagram of the coordinates corresponding to the external object data generated by the subject vehicle C1 according to the embodiments in Figure 8 of the present application. Figure 9E is a schematic diagram of the coordinates corresponding to the external object data after removal the object according to the embodiments in Figure 8 of the present application. Generation of the external object data and the subject vehicle object data is discussed according to Figure 2 and Figure 3 and omitted here.

The processing unit 111 determines that the external vehicles C2 and C3 are matched objects in the external object data and the vehicle sensed data based on the denotation OBJ2 and OBJ3 corresponding to the external vehicles C2 and C3 in the external object data and denotation OBJ2 and OBJ3 corresponding to the external vehicles C2 and C3 in the subject vehicle sensed data, but that the object C_OBJ1, which is denoted with OBJ1, is an unmatched object. Accordingly, the processing unit 111 removes denotation OBJ2 and OBJ3 corresponding to the external vehicles C2 and C3 in Figure 9D, and then determines whether data of the denotation OBJ1 corresponding to the object C_OBJ11 reaches the trigger threshold. For example, the denotation OBJ1 is within the warning region WR.

After determining that the trigger threshold is reached, the processing unit 111 can selectively request the vehicle see-through data from one of the external vehicles C2 and C3 according to the external object data. For example, in some embodiments, the processing unit 111 makes selection based on distances between the object C_OBJ1 and the external vehicles C2 and C3. When the distance between the object C_OBJ1 and the external vehicle C2 is smaller than the distance between the object C_OBJ1 and the external vehicle C3, the processing unit 111 selects to transmit the trigger signal to the communication unit 114 for requesting and receiving the vehicle see-through data transmitted by the external vehicle C2.

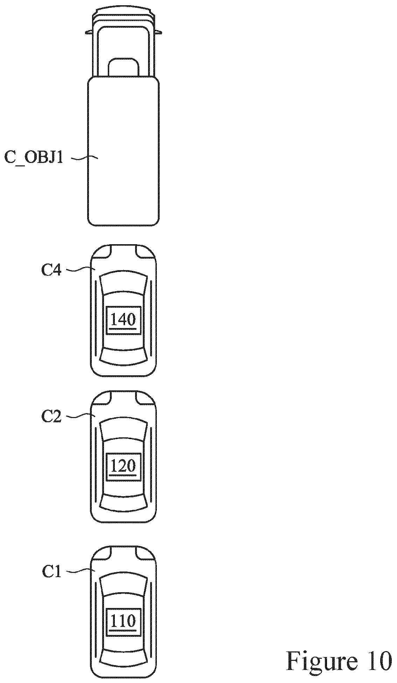

In some other embodiments, as shown in Figure 10, there are the external vehicle C2, the external vehicle C4 and the object C_OBJ11 located directly in front of the subject vehicle C1 in sequence. The external vehicle C4 includes a vehicle data processing device 140 similar to or functioning similarly to the vehicle data processing device 110.

In the embodiments of Figure 10, the external vehicle C2 may generate, from the external vehicle C2, the external object data containing the external vehicle C4 and the object C_OBJ1, and obtain the vehicle see-through data containing the object C_OBJ1, in accordance with vehicle data provision method 200. Then, the subject vehicle C1 may generate the object data containing the external vehicles C2, C4, and the object C_OBJ1 according to the vehicle data provision method 200, and request the external vehicle C2 to transmit the vehicle see-through data containing the object C_OBJ1 for the display device 116 of the subject vehicle C1 to display the image of the object C_OBJ1.

The present application provides a vehicle data processing device and a method of providing data, which means that by determining the triggering situation of the see-through service the see-through function is activated only when a driver's Non-Line-of-Sight (NLOS) object is detected, avoiding excessive interference with driving, enhancing sensory activation, and reducing image bandwidth wastage.

While this application has been described in the above embodiments, it is not intended to limit the scope of the application. Those skilled in the art may make various modifications and refinements without departing from the spirit and scope of this application. Therefore, the protection scope of this application shall be defined by the appended claims.

## Claims

1. A vehicle data processing device(110), **characterized in that**, comprising:
a communication unit(114), configured to receive first sensed object data transmitted from a first external vehicle(C2);
a sensing unit(112), configured to generate subject vehicle sensed data;
a processing unit(111), electrically or communicatively connected to the communication unit and the sensing unit, configured to generate, according to the first sensed object data and the subject vehicle sensed data, external object data,
generate a comparison result based on position data in the external object data and position data in the subject vehicle sensed data, and
if the comparison result includes at least one unmatched object(C_OBJ1), generate a trigger signal to the communication unit for requesting and receiving vehicle see-through data transmitted from the first external vehicle; and
a display device(116), configured to provide, according to the vehicle see-through data, a display screen including the at least one unmatched object.

2. The vehicle data processing device of claim 1, wherein the processing unit is further configured to determine a category of an object in the subject vehicle sensed data to generate subject vehicle category data.

3. The vehicle data processing device of claim 2, wherein the processing unit further configured to determine whether external object category data in the external object data and the subject vehicle category data are the same,
when the external object category data and the subject vehicle category data are the same, the processing unit determines whether a distance difference between the position data in the external object data and the position data in the subject vehicle sensed data is smaller than or equal to a threshold value, and
when the distance difference is smaller than or equal to the threshold value, the processing unit removes data of a corresponding object from the subject vehicle sensed data.

4. The vehicle data processing device of claim 1, 2 or 3, wherein a first frequency of the processing unit is greater than or equal to a second frequency of the communication unit.

5. The vehicle data processing device of claim 1, 2 or 3, wherein the communication unit is further configured to receive second sensed object data from a second external vehicle.

6. The vehicle data processing device of claim 5, wherein when a distance between the at least one unmatched object and the first external vehicle smaller than a distance between the at least one unmatched object and the second external vehicle, the processing unit is further configured to transmit the trigger signal to the communication unit for requesting and receiving the vehicle see-through data transmitted from the first external vehicle.

7. The vehicle data processing device of claim 5 or 6, wherein when a distance the at least one unmatched object and the first external vehicle is greater than a distance between the at least one unmatched object and the second external vehicle, the processing unit is further configured to transmit the trigger signal to the communication unit for requesting and receiving the vehicle see-through data transmitted from the second external vehicle.

8. The vehicle data processing device of claim 1, wherein the processing unit is further configured to determine a data time difference between the first sensed object data and the subject vehicle sensed data is smaller than or equal to a tolerance value,
when the data time difference is smaller than or equal to the tolerance value, the processing unit generates the external object data according to the first sensed object data and the subject vehicle sensed data.

9. The vehicle data processing device of claim 1, wherein the processing unit is configured to determine a distance difference between the position data in the external object data and the position data in the subject vehicle sensed data is smaller than or equal to a threshold value to generate the trigger signal.

10. The vehicle data processing device of claim 1, wherein when the comparison result indicates that the external object data matches the subject vehicle sensed data, the processing unit is further configured to generate a request to the communication unit to stop receiving the vehicle see-through data.

11. A vehicle data provision method, **characterized in that**, configured for a vehicle data processing device(110), comprising:
receiving first sensed object data transmitted from a first external vehicle(C2);
generating a subject vehicle sensed data;
generating external object data according to the first sensed object data and the subject vehicle sensed data;
generating a comparison result based on the external object data and the subject vehicle sensed data;
if the comparison result includes at least one unmatched object(C_OBJ1), generating a trigger signal for requesting and receiving a first vehicle see-through data transmitted from the first external vehicle; and
providing, according to the first vehicle see-through data, a display screen including the at least one unmatched object.

12. The vehicle data provision method of claim 11, wherein generating the comparison result based on the external object data and the subject vehicle sensed data comprises:
comparing category data and position data of plurality of objects in the external object data with the category data and position data of a plurality of objects in the subject vehicle sensed data one by one to remove matched object; and
when a distance difference between an object in the external object data and an object in the subject vehicle sensed data exceeds a threshold value, determining the object as the at least one unmatched object.

13. The vehicle data provision method of claim 11, further comprising:
receiving a second sensed object data from a second external vehicle;
calculating a first distance between the first external vehicle and the at least one unmatched object;
calculating a second distance between the second external vehicle and the at least one unmatched object;
comparing the first distance and the second distance, and when the first distance is smaller than the second distance, receiving the first vehicle see-through data transmitted from the first external vehicle; and
when the first distance is greater than the second distance, receiving a second vehicle see-through data transmitted from the second external vehicle.

14. The vehicle data provision method of claim 11, further comprising:
when a data time difference between the external object data and the subject vehicle sensed data is greater than a tolerance value, stopping comparing the external object data with the subject vehicle sensed data.

15. The vehicle data provision method of claim 11, further comprising:
determining whether a position of the at least one unmatched object is within a warning region to generate the trigger signal.
